# EUROPEAN PATENT SPECIFICATION

(11) **EP 1 908 250 B1**
(45) Date of publication and mention of the grant of the patent: **25.08.2010**
(21) Application number: 06757872.4
(22) Date of filing: 15.06.2006
(51) Int. Cl.: H04L 29/06, H04L 12/28

(54) **MOBILE PHONE WITH RFID READER AND WLAN TRANSMITTER INTEGRATED ON SIM CARD**
MOBILTELEFON MIT AUF SIM-KARTE INTEGRIERTEM RFID-LESER UND WLAN-SENDER
TELEPHONE MOBILE DOTE D'UN LECTEUR RFID ET D'UN EMETTEUR WLAN INTEGRES SUR UNE CARTE SIM

(30) Priority: 20.06.2005 NO 20053016
(43) Date of publication of application: 09.04.2008
(73) Proprietor: Telenor ASA, 1331 Fornebu (NO)
(72) Inventor: BREDE, Steinar, N-7048 Trondheim (NO)
(74) Representative: Briddes, Sam
(86) International application number: PCT/NO2006/000228
(87) International publication number: WO 2006/137740

(56) References cited:
- EP-A- 1 536 573
- WO-A-00/74406
- WO-A-99/25140
- WO-A-2004/002176
- "BLUETOOTH ENABLED SIM-CARD" RESEARCH DISCLOSURE, MASON PUBLICATIONS, HAMPSHIRE, GB, no. 439, 1 November 2000 (2000-11-01), page 1888, XP001009264 ISSN: 0374-4353
- PENTTILA K ET AL: "Use and interface definition of mobile RFID reader integrated in a smart phone" CONSUMER ELECTRONICS, 2005. (ISCE 2005). PROCEEDINGS OF THE NINTH INTERNATIONAL SYMPOSIUM ON MACAU SAR 14-16 JUNE 2005, PISCATAWAY, NJ, USA,IEEE, 14 June 2005 (2005-06-14), pages 353-358, XP010832175 ISBN: 0-7803-8920-4
- FENG V W -S ET AL: "WGSN: WLAN-based GPRS support node with push mechanism" COMPUTER JOURNAL OXFORD UNIVERSITY PRESS FOR BRITISH COMPUT. SOC UK, vol. 47, no. 4, 2004, pages 405-417, XP002397867 ISSN: 0010-4620
- JUERGEN CARSTENS: "Automatische Anmeldung an WLAN Netzwerke" IP.COM JOURNAL, IP.COM INC., WEST HENRIETTA, NY, US, 25 October 2003 (2003-10-25), XP013013062 ISSN: 1533-0001

## Description

### Introduction

The present invention relates to the field of radio frequency communication. More specifically, it relates to identification of a tag for accessing supplementary information regarding an object marked with the tag. The invention describes a method and system combining several technologies for accessing said information. By combining telecommunication, WLAN, and radio frequency identification, a novel and flexible method and system is accomplished.

The invention is suitable for different purposes, e.g. museum guiding, tourist guiding, non-contact payment systems, wireless security and authentication, and smart objects.

### Background of the invention/Prior art

Radio frequency identification (RFID) is a technology for storing and retrieving data from identification tags. RFID tags can be interrogated and read on a short distance from a RFID reader.

RFID technology in connection with mobile phones has been launched through Sony Felica technology, and Philips and Sony have recently teamed up with Nokia to establish the NFC (Near Field Communication) Forum, which will promote the implementation and standardization of NFC technology.

In most previous scenarios the mobile handsets have been the bearers of a tag while the RFID reader has been stationary. NFC technology have the possibility of both being an active reader and passive tag. This opens the possibility of having RFID readers in mobile handsets, giving the possibility of making the tag stationary and the handsets movable.

Known systems deploying RFID technology for Mobile phones in the area of non-contact Payment and Wireless Security and Authentication etc., locate the active RFID reader at a stationary fixed location where communication is to occur (contact point). This requires an infrastructure of active RFID readers at all contact points. The cost of an active RFID reader is significantly larger than a passive tag. In some scenarios, it is therefore advantageous to use passive RFID tags.

The present invention addresses scenarios where applications require a large number of contact points and where it is advantageous to use an active RFID reader located in the mobile unit and passive tags as contact points.

As an example, in Louvers there are exhibited around 29000 works of art. It would be cost effective to tag each piece of art with a passive RFID tag rather than an active RFID reader.

The present invention merges telecommunication, RFID, WLAN and SIM card technology. By introducing use of WLAN as means for accessing supplementary information regarding an object marked with a tag, the user of the system will experience a more cost effective and faster service.

By transmitting tag information to a local WLAN infrastructure instead of through the mobile network, the user of the system will get quicker response and may control services locally.

The present invention comprises a SIM card with its SIM card specific circuitry integrated with WLAN and active RFID reader circuitry on the handset. A tag is read by means of the RFID reader, and its information is sent to a WLAN network by means of the integrated WLAN transmitter on the SIM card.

Since the communication processing is performed on the SIM card, billing of local WLAN services can be performed.

The present invention can be utilized by telecom operators, thereby giving the possibility of launching new services. Related prior art documents are WO 2004/002176 A1, disclosing a SIM card including a WLAN transceiver, and K. Penttilä et al. "Use and Interface Definition of Mobile RFID Reader Integrated in a Smart Phone" ISCE 2005, IEEE. **Summary of the invention**

The present invention covers different aspects of accessing information by using a mobile phone with RFID reader technology, and a SIM card with integrated WLAN means.

According to a first aspect, the invention establishes a novel method for using a mobile phone for acquiring supplementary information regarding an object provided with an identification tag as defined in claim 1. The method comprises the following steps:
- broadcasting the presence and identification of the mobile phone by transmitting signals from active WLAN means, integrated on the SIM card in the mobile phone, to an information processing server available through a local WLAN network, said information processing server comprising means for communicating with the telecom operator of the mobile phone;
- receiving a request presented on the mobile phone from the telecom operator asking the user of the mobile phone if the information acquiring service available is accepted, and if accepted:
- reconfiguring the mobile phone making it ready for acquiring supplementary information regarding an object, said reconfiguring including activating a radio frequency identification tag reader in the mobile phone;

- reading identifier information from an identification tag close to the mobile phone by means of the radio frequency identification tag reader;
- sending the identifier information to the information processing server through the local WLAN network;
- receiving supplementary information on the mobile phone through the local WLAN network, regarding the object provided with the information tag.

According to a second aspect, the invention describes a system for using a mobile phone for acquiring supplementary information regarding an object provided with an identification tag, and where the system comprises means for performing the method described above, as set out in claim 4.

According to a third aspect, the invention relates to a SIM card, as specified in claim 5.

The objects stated above are achieved by means of a method, system and a SIM card as set forth in the appended set of claims.

### Detailed description

The invention will now be explained in more detail with reference to the figures where:
Figure 1 shows an overview of the system according to the invention, and
Figure 2 shows a flow chart describing an example of use of the invention.

As mentioned, the invention merges SIM cards, RFID systems and WLAN systems with mobile phone systems, thus opening the market for new applications and services for mobile phones.

Merging the SIM card with an active RFID reader/interrogator and a WLAN transmitter introduces a number of new possibilities.

From a system perspective the Subscriber Identity Module (SIM) card, is the device holding the A3 and A8 algorithms and the IMSI (International Mobile Subscriber Identity) and the Subscriber Authentication Key (Ki) in a GSM network. These keys and algorithms are used for authentication and identification in the GSM network. Introducing a RFID reader/interrogator in conjunction with the SIM card pursues the tasks of the SIM card for authentication and identification on a separate new wireless interface. This enables operators, third party developers and content/service delivery companies to perform billing toward such services.

One of the advantages of the GSM architecture and the SIM-card is that the SIM-card can be moved from one Mobile Phone to another. Arranging a WLAN transmitter on a SIM card makes upgrades very simple for the users and makes the SIM card a "personal" device. When linked to the concept of physical browsing a user may be authenticated and authorized towards an infrastructure of RFID tags and the WLAN infrastructure for service delivery.

The invention discloses a SIM card that controls a RFID reader/interrogator in the mobile phone. RFID based applications and services may thereby be user or telecom operator initiated, i.e. a service may use the location of a mobile phone within the GSM network to initiate a RFID service.

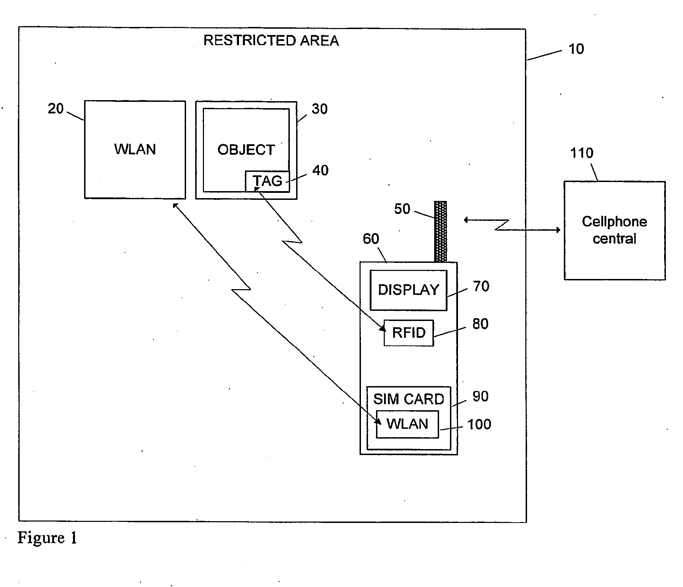

Figure 1 shows the inventive system set up for accessing supplementary information with regard to an object linked to an identification tag.

The system comprises at least one object 30, within a restricted area 10, provided with an identification tag 40 making it possible to identify the object 30.

The system further comprises a local WLAN server 20 for storing and handling relevant supplementary information regarding the object 30.

For using the system, a mobile phone 60 with a display 70 for presenting information to the user is further provided with a SIM card 90 with integrated means for WLAN 100.

The key feature of the system is a RFID reader 80 integrated in the mobile phone 60. This makes it possible to read information from an identification tag 40.

When the RFID reader 80 has read the identification from the identification tag 40, the identification is transmitted through the integrated WLAN means 100 on the SIM card 90 thereby enabling requests for supplementary information from the local WLAN server 20.

The system also comprises a mobile phone central 110 communicating with the mobile phone 60 through the antenna 50 of the mobile phone 60, enabling the network operator of the mobile phone 60 to charge for services used. This is further described below.

In the following an example on how this system can be used is described.

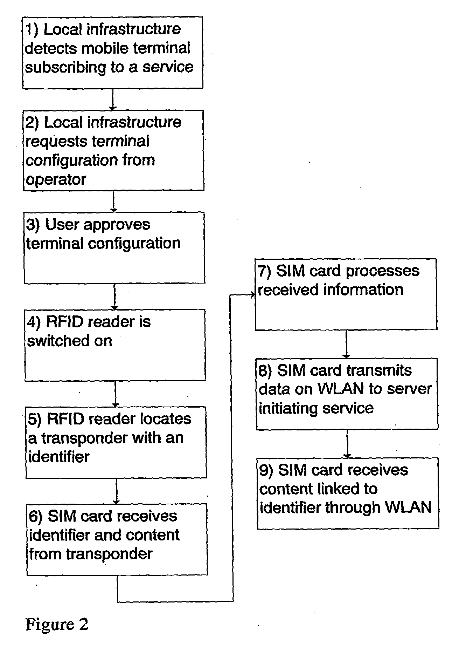

Figure 2 shows a flow chart describing an example of use of the system according to the invention. This is only one scenario meant to illustrate some of the concepts of the system. A skilled person in the art will realize that the invention can be used in a plurality of other implementations.

A subscriber to a "museum guide" service within a restricted area 10 is walking towards the restricted area 10. The museums local WLAN network 20 detects the active WLAN 100 on the SIM card 90 and has this user on list of subscribers, indicated in 1). The "museum service" starts an initiation process of the service by asking the telecom operator through a cellphone central 110 to reconfigure the mobile phone 60 for the service, denoted in 2).

If the user accepts he/she will receive a new configuration for the mobile phone from the operator with a welcome message asking for approval before the new settings are operational, denoted by 3) and 4). The new configuration may include activating the RFID reader 80, adding new themes, adjusting WLAN settings for content delivery, charging the customer etc.

When the subscriber of the service walks to a picture and holds the mobile phone toward a passive RFID tag close by the picture, denoted by 5), the tag containing an identifier and possibly content data is read 6). This information is processed in 7) enabling the SIM card to transmit the identifier by means of its local WLAN 100 to the WLAN server 20, denoted in 8). The WLAN server 20 responds with delivery of supplementary content to the subscriber through the operator-controlled WLAN network, indicated in 9).

In a preferred embodiment, the RFID reader 80 is located in the mobile phone 60, e.g. a mobile phone with a SIM, card 90 containing integrated WLAN circuitry 100 and means for communicating with the RFID reader 80.

In another embodiment, the RFID reader 80 is fitted on the SIM card 90 together with the WLAN circuitry 100.

Fitting WLAN circuitry and SIM specific circuitry on one single SIM-card poses challenges in terms of physical size and antenna construction, but it is feasible by careful construction.

A SIM-card used in current GSM handsets has an outer dimensions 15 x 25 x 1 mm defined in ETSI TS 102 221 Smart cards; UICC-terminal interface; Physical and logical characteristics (Release 6).

Telenor has already implemented WLAN circuitry on a SIM card. The addition of circuitry for communicating with a RFID reader performing the communication with the tags and facilitating data transfers will make the SIM card far more flexible. The RFID reader/interrogator should perform functions like; signal conditioning, parity error checking and correction, algorithms for decoding and retransmission control.

The communication between the SIM card 90 and the mobile phone 60 is not changed with regard to standard SIM cards (3GPP standard). It is be possible to interact with the RFID reader 80 from the mobile phone 60 by making use of SIM-card programming. This enables turning the reader on/off, and thereby enabling/disabling mobile services from the mobile phone network.

## Claims

1. A method for using a mobile phone (60) for acquiring supplementary informations regarding an object (30) provided with an identification tag (40), **characterised in** performing the following steps:
• broadcasting the presence and identification of the mobile phone (60) by transmitting signals from active WLAN means, (100) integrated on the SIM card (90) in the mobile phone (60), to an information, processing server (20) available through a local WLAN network, said information processing server (20) comprising means for communicating with the telecom operator (110) of the mobile phone (60);
- receiving a request presented on the mobile phone (60) from the telecom operator (110) asking the user of the mobile phone (60) if the information acquiring service available is accepted, and if accepted;
- reconfiguring the mobile phone (60) making it ready for acquiring supplementary information regarding an object (30), said reconfiguring including activating a radio frequency identification tag reader (80) in the mobile phone (60);
- reading identifier information from said identification tag (40) close to the mobile phone (60) by means of the radio frequency identification tag reader (80);
- sending the identifies information to the information processing server (20) through the local WLAN network;
- receiving supplementary information on the mobile phone (60) through the WLAN network, regarding the object (30) provided with the identification tag (40).

2. A method according to claim 1, **characterised in that** the presence and identification signals include SIM card specific parameters.

3. A method according to claim 1, **characterised in that** the reconfiguring of the mobile phone (60) is performed according to instructions received from the telecom operator (110).

4. A system (10) for using a mobile phone (60) for acquiring supplementary information regarding an object (30) provided with an identification tag (40), **characterised in that** the system (10) comprises:
- means for broadcasting the presence and identification of the mobile phone (60) by transmitting signals from active WLAN means (100), in the mobile phone (60), to an information processing server (20) available through a local WLAN network, said information processing server (20) comprising means for communicating with the telecom operator (110) of the mobile phone (60);
- means for receiving a request presented on the mobile phone (60) from the telecom operator (110) asking the user of the mobile phone (60) if the information acquiring service available is accepted;
- means for reconfiguring the mobile phone (60) making it ready for acquiring supplementary information regarding an object (30), said reconfiguring including means for activating a radio frequency identification tag reader (80) in the mobile phone (60);
- means for reading an identifier from said identification tag (40) close to the mobile phone (60) by means of the radio frequency identification tag reader (80);
- means for sending the identifier information to the information processing server (20) through the local WLAN network;
- means for receiving supplementary information on the mobile phone (60) through the local WLAN network regarding the object (30) provided with the identification tag (40).

5. A SIM card (90) for a mobile phone (60) for acquiring supplementary information regarding an object (30) provided with an identification tag (40), comprising a processing device, a memory device, an I/O device, and WLAN means (100), **characterised in that** the SIM card (90) further comprises:
- communication means for communicating and exchanging identification tag (40) specific information with a radio frequency identification tag reader (80) in the mobile phone (60);
- control means for reconfiguring the identification tag reader (80) via said 110 device on the SIM card (90) by activating the identification tag reader (80) to be operatively enabled or disabled, making the mobile phone (60) ready for acquiring supplementary information regarding said object (30) provided with said identification tag (40), through said WLAN means (100) on the SIM card (90).

6. A SIM card (90) according to claim 5, **characterised in that** it further comprises a identification tag reader (80).

7. A SIM card (90) according to claim 5 and 6, adapted to be used in a system according to claim 4.

8. A mobile phone (60) comprising a SIM card (90) according to one of the claims 5-6.

## Patentansprüche

1. Verfahren zum Verwenden eines Mobiltelefons (60) zum Erlangen von Zusatzinformation bezüglich eines Objekts (30), das mit einem Identifikations-Tag (40) versehen ist, **gekennzeichnet durch** Ausführen der folgenden Schritte:
- Rundsenden der Anwesenheit und Identifikation des Mobiltelefons (60) **durch** Übertragen von Signalen von einem aktiven WLAN-Mittel (100), das auf der Sim-Karte (90) in dem Mobiltelefon (60) integriert ist, zu einem Informationsverarbeitungsserver (20), der über das lokale WLAN-Netz verfügbar ist, wobei der Informationsverarbeitungsserver (20) Mittel zum Kommunizieren mit dem Telekom-Betreiber (110) des Mobiltelefons (60) umfasst;
- Empfangen einer Anfrage, die auf dem Mobiltelefon (60) präsentiert wird, von dem Telekom-Betreiber (110), die den Benutzer des Mobiltelefons (60) fragt, ob der Informationserlangungs-Service, der verfügbar ist, akzeptiert wird, und wenn er akzeptiert wird;
Rekonfigurieren des Mobiltelefons (60), was es bereit macht zum Erlangen von Zusatzinformation bezüglich eines Objekts (30), wobei das Rekonfigurieren ein Aktivieren eines Funkfrequenzidentifikations-Tag-Lesers (80) in dem Mobiltelefon (60) beinhaltet;
Lesen von Identifizierer-Information von dem Identifikations-Tag (40), das nahe zu dem Mobiltelefon (60) ist, mittels des Funkfrequenzidentifikations-Tag-Lesers (80);
Senden der Identifizierer-Information zu dem Informationsverarbeitungsserver (20) **durch** das lokale WLAN-Netz;
Empfangen von Zusatzinformation auf dem Mobiltelefon (60) **durch** das WLAN-Netz bezüglich des Objekts (30), das mit dem Identifikations-Tag (40) versehen ist.

2. Verfahren nach Anspruch 1, **dadurch gekennzeichnet, dass** die Präsenz- und Identifikations-Signale Sim-Kartenspezifische Parameter beinhalten.

3. Verfahren nach Anspruch 1, **dadurch gekennzeichnet, dass** das Rekonfigurieren des Mobiltelefons (60) entsprechend Befehlen durchgeführt wird, die von dem Telekom-Betreiber (110) empfangen werden.

4. System (10) zum Verwenden eines Mobiltelefons (60) zum Erlangen von Zusatzinformation bezüglich eines Objekts (30), das mit einem Identifikations-Tag (40) versehen ist, **dadurch gekennzeichnet, dass** das System (10) umfasst:
Mittel zum Rundsenden der Präsenz und Identifikation des Mobiltelefons (60), durch Übertragen von Signalen von einem aktiven WLAN-Mittel (100) in dem Mobiltelefon (60), zu einem Informationsverarbeitungsserver (20), der durch ein lokales WLAN-Netz verfügbar ist, wobei der Informationsverarbeitungsserver (20) Mittel zum Kommunizieren mit dem Telekom-Betreiber (110) des Mobiltelefons (60) umfasst;
Mittel zum Empfangen einer Anfrage, die auf dem Mobiltelefon (60) präsentiert wird, von dem Telekom-Betreiber (110), die den Benutzer des Mobiltelefons (60) fragt, ob der verfügbare Informationserlangungs-Service akzeptiert wird;
Mittel zum Rekonfigurieren des Mobiltelefons (60), was es bereit macht zum Erlangen von Zusatzinformation bezüglich eines Objekts (30), wobei das Rekonfigurieren Mittel zum Aktivieren eines Funkfrequenzidentifikations-Tag-Lesers (80) in dem Mobiltelefon (60) beinhaltet;
Mittel zum Lesen eines Identifizierers von dem Identifikations-Tag (40), der nahe zu dem Mobiltelefon (60) ist, mittels des Funkfrequenzidentifikations-Tag-Lesers (80);
Mittel zum Senden der Identifizierer-Information zu dem Informationsverarbeitungsserver (20) durch das lokale WLAN-Netz;
Mittel zum Empfangen von Zusatzinformation auf dem Mobiltelefon (60) durch das lokale WLAN-Netz bezüglich des Objekts (30), das mit dem Identifikations-Tag (40) versehen ist.

5. Sim-Karte (90) für ein Mobiltelefon (60) zum Erlangen von Zusatzinformation bezüglich eines Objekts (30), das mit einem Identifikations-Tag (40) versehen ist, umfassend ein Verarbeitungsgerät, ein Speichergerät, ein Eingabe/Ausgabe-Gerät, ein WLAN-Mittel (100), **dadurch gekennzeichnet, dass** die Sim-Karte (90) ferner umfasst:
Kommunikationsmittel zum Kommunizieren und Austauschen von Identifikations-Tag-(40)-spezifischer Information mit einem Funkfrequenzidentifikations-Tag-Leser (80) in dem Mobiltelefon (60);
Steuermittel zum Rekonfigurieren des Identifikations-Tag-Lesers (80) über das Eingabe/Ausgabe-Gerät auf der Sim-Karte (90) durch Aktivieren des Identifikations-Tag-Lesers (80), um operativ eingeschaltet oder ausgeschaltet zu sein, was das Mobiltelefon (60) bereit macht zum Erlangen von Zusatzinformation bezüglich des Objekts (30), das mit dem Identifikations-Tag (40) versehen ist, durch das WLAN-Mittel (100) auf der Sim-Karte (90).

6. Sim-Karte (90) nach Anspruch 5, **dadurch gekennzeichnet, dass** es ferner einen Identifikations-Tag-Leser (80) umfasst.

7. Sim-Karte (90) nach Anspruch 5 oder 6, welche eingerichtet ist, um in einem System nach Anspruch 4 verwendet zu werden.

8. Mobiltelefon (60), das eine Sim-Karte (90) nach einem der Ansprüche 5 bis 6 umfasst.

## Revendications

1. Procédé destiné à utiliser un téléphone mobile (60) de façon à acquérir des informations supplémentaires qui concernent un objet (30) doté d'une étiquette d'identification (40), **caractérisé par** l'exécution des étapes suivantes consistant à :
- diffuser la présence et l'identification du téléphone mobile (60) en transmettant des signaux en provenance de moyens WLAN actifs (100) intégrés sur la carte SIM (90) située dans le téléphone mobile (60), à un serveur de traitement d'informations (20) disponible par l'intermédiaire d'un réseau local WLAN, ledit serveur de traitement d'informations (20) comprenant des moyens destinés à communiquer avec l'opérateur de télécommunications (110) du téléphone mobile (60) ;
- recevoir une demande présentée sur le téléphone mobile (60) en provenance de l'opérateur de télécommunications (110), qui demande à l'utilisateur du téléphone mobile (60) si le service d'acquisition d'informations disponible est accepté, et s'il est accepté :
- reconfigurer le téléphone mobile (60) de façon à ce qu'il soit prêt pour acquérir des informations supplémentaires qui concernent un objet (30), ladite reconfiguration comprenant une activation d'un lecteur d'étiquette d'identification par fréquences radio (80) dans le téléphone mobile (60) ;
- lire des informations d'identifiant à partir de ladite étiquette d'identification (40) à proximité du téléphone mobile (60) au moyen du lecteur d'étiquette d'identification par fréquences radio (80) :
- envoyer les informations d'identifiant au serveur de traitement d'informations (20) par l'intermédiaire du réseau local WLAN ;
- recevoir les informations supplémentaires sur le téléphone mobile (60) par l'intermédiaire du réseau WLAN, qui concernent l'objet (30) équipé de l'étiquette d'identification (40).

2. Procédé selon la revendication 1, **caractérisé en ce que** les signaux de présence et d'identification comprennent des paramètres spécifiques à la carte SIM.

3. Procédé selon la revendication 1, **caractérisé en ce que** la reconfiguration du téléphone mobile (60) est exécutée selon des instructions reçues en provenance de l'opérateur de télécommunications (110).

4. Système (10) destiné à utiliser un téléphone mobile (60) de façon à acquérir des informations supplémentaires qui concernent un objet (30) doté d'une étiquette d'identification (40), **caractérisé en ce que** le système (10) comprend :
- des moyens destinés à diffuser la présence et l'identification du téléphone mobile (60) en transmettant des signaux en provenance de moyens WLAN actifs (100), situés dans le téléphone mobile (60), à un serveur de traitement d'informations (20) disponible par l'intermédiaire d'un réseau local WLAN, ledit serveur de traitement d'informations (20) comprenant des moyens destinés à communiquer avec l'opérateur de télécommunications (110) du téléphone mobile (60) ;
- des moyens destinés à recevoir une demande présentée sur le téléphone mobile (60) en provenance de l'opérateur de télécommunications (110), qui demande à l'utilisateur du téléphone mobile (60) si le service d'acquisition d'informations disponible est accepté ;
- des moyens destinés à reconfigurer le téléphone mobile (60) de façon à ce qu'il soit prêt pour acquérir des informations supplémentaires qui concernent un objet (30), ladite reconfiguration comprenant des moyens destinés à activer un lecteur d'étiquette d'identification par fréquences radio (80) dans le téléphone mobile (60) ;
- des moyens destinés à lire un identifiant à partir de ladite étiquette d'identification (40) à proximité du téléphone mobile (60) au moyen du lecteur d'étiquette d'identification par fréquences radio (80) :
- des moyens destinés à envoyer les informations d'identifiant au serveur de traitement d'informations (20) par l'intermédiaire du réseau local WLAN ;
- des moyens destinés à recevoir les informations supplémentaires sur le téléphone mobile (60) par l'intermédiaire du réseau local WLAN, qui concernent l'objet (30) équipé de l'étiquette d'identification (40).

5. Carte SIM (90) d'un téléphone mobile (60) destinée à acquérir des informations supplémentaires qui concernent un objet (30) doté d'une étiquette d'identification (40), comprenant un dispositif de traitement, un dispositif de mémoire, un dispositif d'entrées / sorties, et des moyens de WLAN (100), **caractérisée en ce que** la carte SIM (90) comprend en outre :
- des moyens de communication destinés à communiquer et à échanger des informations spécifiques à une étiquette d'identification (40) avec un lecteur d'étiquette d'identification par fréquences radio (80) situé dans le téléphone mobile (60) ;
- des moyens de commande destinés à reconfigurer le lecteur d'étiquette d'identification (80) par l'intermédiaire dudit dispositif d'entrées / sorties situé sur la carte SIM (90) en activant le lecteur d'étiquette d'identification (80) de façon à le mettre en service ou hors service de manière opérationnelle, de façon à ce que le téléphone mobile (60) soit prêt pour acquérir des informations supplémentaires qui concernent ledit objet (30) doté de ladite étiquette d'identification (40), par l'intermédiaire desdits moyens de WLAN (100) situés sur la carte SIM (90).

6. Carte SIM (90) selon la revendication 5, **caractérisée en ce qu'**elle comprend en outre un lecteur d'étiquette d'identification (80).

7. Carte SIM (90) selon la revendication 5 et la revendication 6, adaptée de manière à être utilisée dans un système selon la revendication 4.

8. Téléphone mobile (60) comprenant une carte SIM (90) selon l'une quelconque des revendications 5 à 6.
